# EUROPÄISCHE PATENTANMELDUNG

(11) **EP 1 841 041 A1**
(43) Veröffentlichungstag der Anmeldung: **03.10.2007**
(21) Anmeldenummer: 07005905.0
(22) Anmeldetag: 22.03.2007
(51) Int. Cl.: H02K 1/30

(54) **Elektromotor mit Rotor, Rotor und Verfahren zur Herstellung eines Rotors für einen Elektromotor**

(30) Priorität: 31.03.2006 DE 102006015534; 02.08.2006 DE 102006036392
(71) Anmelder: AWECO APPLIANCE SYSTEMS GmbH & Co. KG, 88099 Neukirch (DE)
(72) Erfinder: Wallorstorfer, Kurt, 5204 Strasswalchen (AT); Kalavsky, Michal, Dipl.-Ing., 04023 KoSice (SK); Oswald, Gerhard, 88239 Wangen/Haslach (DE)
(74) Vertreter: Eisele, Otten, Roth & Dobler

(57) **Zusammenfassung**

Es wird ein Elektromotor mit Rotor, ein Rotor und ein Verfahren zur Herstellung eines Rotors für einen Elektromotor vorgeschlagen, bei dem der Fertigungsaufwand gegenüber dem Stand der Technik deutlich reduziert ist. Diese Aufgabe wird dadurch gelöst, dass bei dem Rotor eine Kunststoffverbindung (11, 12) zwischen der Rückflusssohle (2) und der Rotorwelle (1) vorgesehen ist. Diese Kunststoffverbindung (11, 12) zwischen der Rückflusssohle (2) und der Rotorwelle (1) wird gemäß dem erfindungsgemäßen Herstellungsverfahren durch Spritzgießen gefertigt.

## Beschreibung

Bei Rotoren von permanent erregten Elektromotoren werden Permanentmagnete auf einer sogenannten Rückflusssohle angebracht, die mit einer Motorwelle verbunden ist. Diese Befestigung, insbesondere der Permanentmagnetpole wird regelmäßig durch eine Verklebung, gegebenenfalls unter Zuhilfenahme einer Befestigungsmanschette realisiert.

Diese Art der Rotorherstellung ist insbesondere für Kleinmotoren sehr aufwändig in der Montage. Zusätzlich wird bei Anwendung derartiger Elektromotoren in feuchter oder nasser Umgebung eine zusätzliche aufwändige Abdichtung des Rotors erforderlich.

Aufgabe der Erfindung ist es demgegenüber, ein Elektromotor bzw. einen Rotor für einen Elektromotor und ein Verfahren zu dessen Herstellung vorzuschlagen, bei der Fertigungsaufwand deutlich reduziert ist.

Diese Aufgabe wird durch die Merkmale der Ansprüche 1, 11 und 12 gelöst.

Dementsprechend zeichnet sich ein erfindungsgemäßer Rotor für einen Elektromotor dadurch aus, dass eine Kunststoffverbindung zwischen der Rückflusssohle und der Rotorwelle vorgesehen ist. Durch diese Art der Fertigung ist eine präzise gegenseitige Fixierung zwischen Rückflusssohle und Rotorwelle und gleichzeitig über den Kunststoff eine formschlüssige und auch wasserdichte Verbindung zwischen Motorwelle und Rückflusssohle in einem einzigen und vor allem bei großen Stückzahlen kostengünstigen Arbeitsgang möglich.

Die Kunststoffverbindung kann beispielsweise durch einen Spritzvorgang hergestellt werden. Ein derartiges Fertigungsverfahren ist u.a. weitgehend einer Automatisierung zugänglich.

In einer Weiterbildung der Erfindung werden auch die Magnetpole durch eine Kunststoffverbindung an der Rückflusssohle fixiert. Die Fixierung der Magnetpole kann dabei in einem einzigen Arbeitsvorgang mit der Verbindung der Rückflusssohle auf der Rotorwelle oder aber in einem zwei-oder mehrstufigen Verfahren realisiert werden.

Darüber hinaus wird vorzugsweise der gesamte Rotor mit einem Kunststoffmantel versehen, der von der Rotorwelle durchsetzt ist. Hierdurch ergibt sich ein vollständig feuchtigkeits-oder nässeresistenter Rotor, wie er beispielsweise in einer Nassläuferpumpe zum Einsatz kommen kann.

Durch die Verwendung von Kunststoff zwischen Welle und Rückflusssohle einerseits sowie zwischen Rückflusssohle und Magnetpolen andererseits, kann ein solcher Kunststoffmantel problemlos an einem derartigen Rotor angebracht z.B. mit dem ohnehin vorhandenen Kunststoff verschmolzen werden.

Ein solcher Kunststoffmantel kann beispielsweise in einem einzigen Fertigungsvorgang im Spritzgussverfahren realisiert werden. Er kann jedoch auch in einem mehrstufigen Verfahren nach der Verbindung der Rotorwelle mit der Rückflusssohle in einem zweiten oder einem weiteren Verfahrensschritt angespritzt werden. Vorzugsweise wird der Kunststoffmantel zugleich zur Befestigung der Magnetpole verwendet, wobei die Befestigung der Magnetpole und das Umspritzen des Rotors in einem Arbeitsgang vorgenommen wird. Der Kunststoffmantel wird dabei vorteilhafterweise mit dem in einem vorhergehenden Arbeitsschritt an angebrachtem Kunststoff verschmolzen.

Um im Bereich der Außenkontur der Magnetpole eine möglichst starke Kunststoffwandung zu erzielen, werden die Magnetpole in den Ecken vorteilhafterweise angeschrägt, so dass die Umhüllungs-Wandstärke in diesem Bereich ein Maximum erreicht.

Bei der Herstellung eines solchen Rotors in einem mehrstufigen Verfahren, wie bereits oben angedeutet, wird vorteilhafterweise in einem ersten Verfahrensschritt zusammen mit der Kunststoffverbindung zwischen Rückflusssohle und Rotorwelle ein Rahmen zum Einsetzen von vorzugsweise permanent erregten Magnetpolen im Spritzgussverfahren geformt.

Ein solcher Rahmen vereinfacht die Positionierung und Fixierung der Magnetpole am Rotor, wobei in einem zweiten Verfahrensschritt anschließend die dauerhafte Verbindung zwischen Magnetpolen und Rotor ebenfalls im Spritzgussverfahren unter Verschmelzung der Kunststoffe erzielbar ist. Im zweiten Verfahrensschritt kann gleichzeitig die vollständige Umspritzung des Rotors mit einem Kunststoffmantel, wie oben ausgeführt, vorgenommen werden.

Ein solcher Kunststoffrahmen kann dabei beispielsweise Hinterschneidungen oder sonstige Rastelemente aufweisen, so dass beim Einsetzen der Magnetpole diese über einen Rastpunkt in den Kunststoffrahmen eingedrückt werden können und dadurch selbsttätig fixiert sind.

Das Einsetzen der Magnetpole wird dabei vorzugsweise außerhalb der Spritzgussform vorgenommen. Hierdurch ist eine schonende Handhabung der Magnetpole in einem gesonderten Montageschritt möglich, wodurch diese vor Beschädigung, beispielsweise vor Kratzern oder dergleichen geschützt sind.

Für das Anspritzen im zweiten Verfahrensschritt werden die Anspritzpunkte vorteilhafterweise mittig zu den Magnetpolen angeordnet, so dass diese durch den Anspritzdruck mit einem gleichmäßig radial nach innen gerichteten Druck auf die Rückflusssohle angepresst werden und somit ein weitgehend rundlaufender und ausgewuchteter Rotor erzeugt wird.

Als Fixierelemente zwischen der Rotorwelle und der Rückflusssohle werden vorteilhafterweise Ausnehmungen, wie Ringnuten oder dergleichen in der Rotorwelle oder aber auch eine Rändelung oder Riffelung in der Wellenoberfläche vorgeschlagen. Auch Rippen, Bohrungen oder dergleichen sind zu diesem Zweck verwendbar. Derartige Strukturen als Fixierelemente sollen die Kraftübertragung zwischen Motorwelle und Rückflusssohle verbessern, d.h. als Schutz gegen Verdrehen dienen und einen Schutz vor axialer Verschiebung bieten.

Für die Positionierung der Rückflusssohle in der Spritzgussform wird diese vorzugsweise mit Positionierungselementen, beispielsweise mit Bohrungen zur Aufnahme von Positionierungsstiften oder dergleichen versehen. In axialer Richtung wird die Positionierung der Rückflusssohle vorteilhafterweise über einen Anschlag in der Form bewerkstelligt.

Weiterhin kann beim erfindungsgemäßen Herstellungsverfahren ein einfacher Ausgleich von Blechtoleranzen der Rückflusssohle erzielt werden. Die Rückflusssohle wird vorzugsweise, wie im Motorenbau üblich, aus einem Blechpaket gebildet. Die axiale Länge eines solchen Blechpaketes lässt sich demnach durch Zusammendrücken des Blechpaketes mit mehr oder weniger Druck in gewissem Umfang variieren. Beim Umspritzen eines solchen Rotorblechpaketes wird daher vorteilhafterweise das Blechpaket zuvor mit einem Druckstempel gegen einen Referenzanschlag, beispielsweise eine Referenzkante gedrückt, so dass sich stets die gleiche Außengeometrie des Rotorblechpakets ergibt, die durch den Kunststoff nach der Erstarrung erhalten bleibt.

Ein Ausführungsbeispiel der Erfindung ist in der Zeichnung dargestellt und wird anhand der Figuren nachfolgend näher erläutert.

Im Einzelnen zeigen
- Figur 1: die einzelnen Bauteile eines Rotors vor einem Spritzgussverfahren in perspektivischer Darstellung;
- Figur 2: ein Zwischenprodukt nach einem ersten Spritzgussvorgang in perspektivischer Darstellung;
- Figur 3: eine perspektivische Zeichnung des Zwischenprodukts gemäß Figur 2 mit Magnetpolen in einer Explosivdarstellung;
- Figur 4: das Zwischenprodukt gemäß Figur 2 mit eingesetzten Magnetpolen;
- Figur 5: einen fertigen Rotor nach einem zweiten Spritzvorgang;
- Figur 6: einen Längsschnitt durch einen fertigen Rotor gemäß Figur 5 und
- Figur 7: einen Querschnitt durch einen fertigen Rotor gemäß Figur 5.

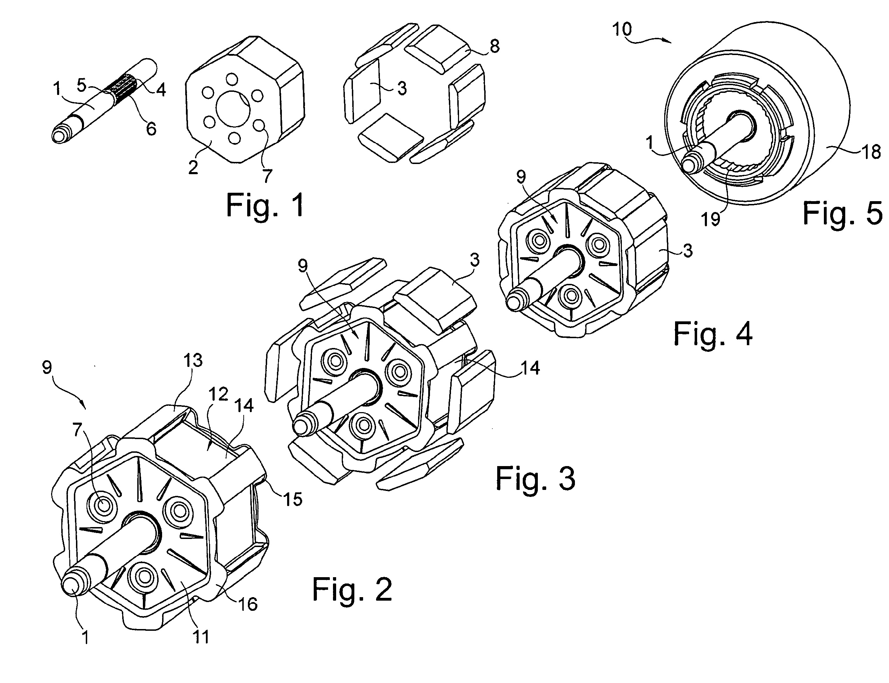

Figur 1 zeigt die Rotorwelle 1, eine Rückflusssohle 2 sowie sechs Magnetpole 3. Die Rotorwelle 1 ist mit zwei Ringnuten 4, 5 sowie im dazwischenliegenden Bereich mit einer Längsriffelung 6 versehen. Die Ringnuten 4, 5 sollen die Rotorwelle im montierten Zustand gegen axiale Verschiebung sichern, während die Längsriffelung 6 ein Verdrehen verhindern soll.

Die Rückflusssohle 2 des Rotors wird durch ein Blechpaket gebildet, das zur besseren Darstellung als einstückiger Gegenstand gezeichnet ist. Der Aufbau einer solchen Rückflusssohle 2 in Form eines Blechpakets ist aus dem Motorenbau bekannt. Die Rückflusssohle 2 ist mit sechs Zentrierbohrungen 7 versehen, die zur Positionierung der Rückflusssohle 2 in der Spritzgussform und insbesondere zur Zentrierung bezüglich der Rotorwelle 1 dienen.

Die Magnetpole 3, die bevorzugt als Permanentmagnete, insbesondere als seltene Erden Magnete ausgebildet sind, sind an ihrer Außenkontur in den Eckbereichen mit Abschrägungen 8 versehen.

Aus den genannten Einzelteilen, d.h. der Rotorwelle 1, der Rückflusssohle 2 und den Magnetpolen 3 wird in dem beschriebenen Ausführungsbeispiel in einem ersten Verfahrensschritt ein Zwischenprodukt 9 hergestellt, aus dem nach dem Einsetzen der Magnetpole 3 in einem zweiten Verfahrensschritt der fertige Rotor 10 gefertigt wird.

In Figur 2 ist das Zwischenprodukt 9 dargestellt. Die Rotorwelle 1 ist zentrisch in der Rückflusssohle 2 angeordnet und mit Kunststoff umspritzt, wobei in der Darstellung gemäß Figur 2 von der Rückflusssohle 2 aufgrund des angespritzten Kunststoffes 11 nur noch die Zentrierbohrungen 7 sichtbar sind. Die Spritzgussform ist dabei so ausgebildet, dass am Zwischenprodukt 9 ein Kunststoffrahmen 12 erzeugt wird, der Vorsprünge 13 und Vertiefungen 14 aufweist. Neben den radialen Vorsprüngen 13 sind stirnseitige Stege 15, 16 angebracht, so dass die Vertiefungen 14 Mulden bilden, die über den gesamten Umfang der Magnetpole 3 diesen einen Halt bieten und somit zuverlässig positionieren.

In Figur 3 ist das Zwischenprodukt 9 mit den Magnetpolen 3 dargestellt, die noch nicht eingesetzt, jedoch in der Explosivdarstellung unmittelbar vor den muldenförmigen Vertiefungen 14 angeordnet sind.

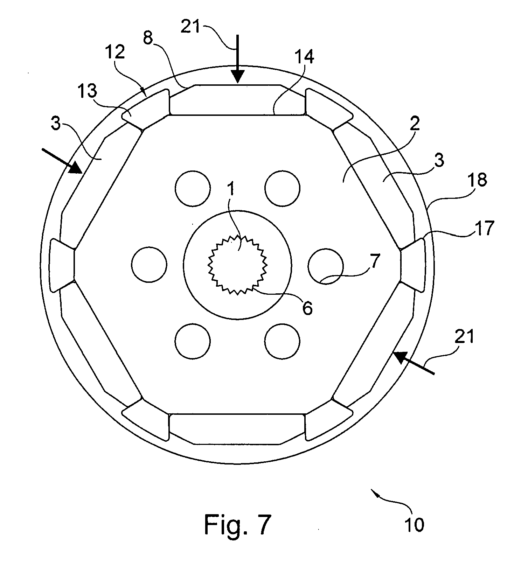

In Figur 4 ist das Zwischenprodukt 9 mit eingelegten Magnetpolen sichtbar. Die Magnetpole sind dabei bereits fixiert, da die Außenkontur der radialen Vorsprünge 13 so gewählt ist, dass sich Rastnasen 17 ergeben, die die Magnetpole 3 verrasten und dadurch am Zwischenprodukt 9 fixieren (vgl. Figur 7).

Dieser Montageschritt, bei dem die Magnetpole 3 in das Zwischenprodukt 9 eingesetzt werden, kann außerhalb der Spritzgussform und damit besonders schonend für die Magnetpole 3 vorgenommen werden. Anschließend wird das Zwischenprodukt 9 mit eingelegten Magnetpolen 3 in einem weiteren Verfahrensschritt vollständig umspritzt, so dass sich ein Kunststoffmantel 18 ergibt, aus dem lediglich die Rotorwelle 1 hervortritt, die den Kunststoffmantel 18 durchsetzt.

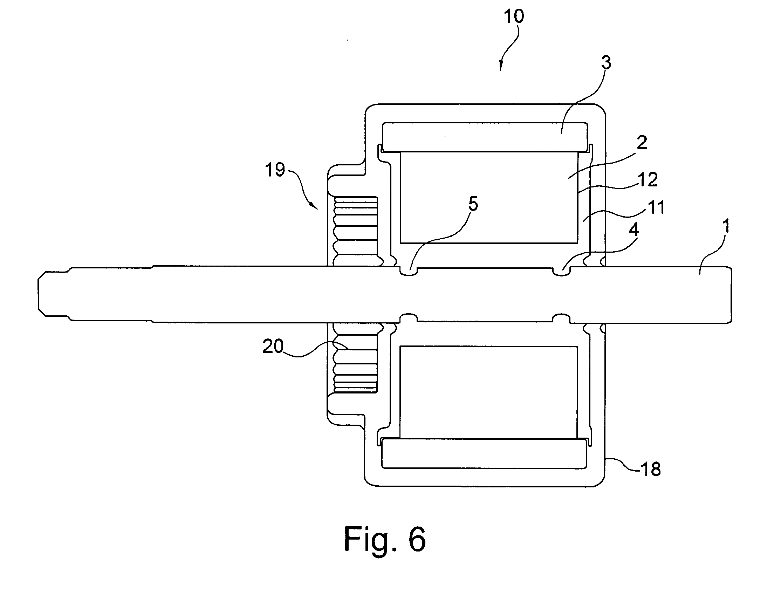

Der Kunststoffmantel 18 wird beim zweiten Spritzvorgang mit dem Kunststoffrahmen 12 aus dem ersten Spritzgussvorgang verschmolzen, so dass sich quasi ein einstückiges Kunststoffteil ergibt, in das die anhand von Figur 1 aufgezählten Bauelemente, dass heißt die Motorwelle 1, die Rückflusssohle 2 und die Magnetpole 3 eingebettet sind.
Im letzten Verfahrensschritt wird in der dargestellten Ausführungsform zugleich ein stirnseitiger Lagersitz 19 mit einer Innenverzahnung 20 an den Rotor 10 angeformt, der zur Aufnahme eines Stirnseitenlagers dient. Der Lagersitz 19 ist in Figur 6 in seiner Ausgestaltung mit Innverzahnung 20 deutlich erkennbar.

In der Querschnittsdarstellung gemäß Figur 7 sind die Anspritzpunkte 21 durch Pfeile dargestellt. Diese sind mittig gegenüber den Magnetpolen 3 und vorteilhafterweise in dem beschreibenden Ausführungsbeispiel unter einem rechten Winkel zu diesen stehend radial nach innen verlaufend angeordnet. Hierdurch wird beim Anspritzen des Kunststoffmantels 18 im zweiten Verfahrensschritt ein gleichmäßig auf alle Magnetpole 3 verteilter, radial nach innen gerichteter Anpressdruck erzeugt, so dass diese gleichmäßig auf die Rückflusssohle 2 bzw. das Zwischenprodukt 9 gepresst werden. Durch diese Maßnahme wird die Unwucht des fertigen Rotors 10 verringert, so dass der fertige Elektromotor rund und vibrationsarm läuft.

Der dargestellte Rotor 10 so wie die beschriebenen Verfahrensschritte zeigen nur beispielhaft, wie mit Hilfe erfindungsgemäßer Kunststoffverbindungen zwischen den einzelnen Bauteilen, dass heißt wenigstens zwischen der Rückflusssohle 2 und der Rotorwelle 1, bevorzugt auch zwischen Rückflusssohle 2 und Magnetpolen 3 in einfachen Verfahrensschritten ohne zu den Aufwand zusätzlicher Montageteile ein Rotor für einen Elektromotor herstellbar ist, der insbesondere für den Einsatz in feuchte oder nasser Umgebung hervorragend geeignet ist. Ein Anwendungsgebiet für einen derartigen Rotor ist beispielsweise als sogenannter Nassläufer in einer Wasserpumpe denkbar. Für diese oder vergleichbare Anwendungen wird der Kunststoff vorzugsweise laugen- und temperaturbeständig und möglichst dampfdicht ausgewählt.

Insbesondere ergibt sich bei der erfindungsgemäßen Herstellung eines Rotors stirnseitig eine großflächige Verschmelzung des Kunststoffs und somit eine gute Verbindung der einzelnen Baukomponenten so wie die Möglichkeit des Anformens weiterer Elemente, wie beispielsweise eines Lagersitzes für ein Stirnseitenlager.

### Bezugszeichenliste:

- 1: Rotorwelle
- 2: Rückflusssohle
- 3: Magnetpol
- 4: Ringnut
- 5: Ringnut
- 6: Längsriffelung
- 7: Zentrierbohrungen
- 8: Abschrägung
- 9: Zwischenprodukt
- 10: Rotor
- 11: Kunststoff
- 12: Kunststoffrahmen
- 13: radialer Vorsprung
- 14: Vertiefung
- 15: Steg
- 16: Steg
- 17: Rastnase
- 18: Kunststoffmantel
- 19: Lagersitz
- 20: Innenverzahnung
- 21: Anspritzpunkt

## Patentansprüche

1. Rotor für ein Elektromotor mit Magnetpolen, einer Rückflusssohle und einer Rotorwelle **dadurch gekennzeichnet, dass** eine Kunststoffverbindung (11, 12) zwischen der Rückflusssohle (2) und der Rotorwelle (1) vorgesehen ist.

2. Rotor nach Anspruch 1 **dadurch gekennzeichnet, dass** die Kunststoffverbindung (11, 12) angespritzt ist.

3. Rotor nach einem der vorgenannten Ansprüche **dadurch gekennzeichnet, dass** die Magnetpole (3) durch eine Kunststoffverbindung an der Rückflusssohle (2) fixiert sind.

4. Rotor nach einem der vorgenannten Ansprüche **dadurch gekennzeichnet, dass** ein Kunststoffmantel (18) den kompletten Rotor (10) umgibt, der lediglich von der Rotorwelle (10) durchsetzt ist.

5. Rotor nach einem der vorgenannten Ansprüche **dadurch gekennzeichnet, dass** der Kunststoffmantel (18) angespritzt ist.

6. Rotor nach einem der vorgenannten Ansprüche **dadurch gekennzeichnet, dass** alle Kunststoffelemente einstückig ausgeformt sind.

7. Rotor nach einem der vorgenannten Ansprüche **dadurch gekennzeichnet, dass** die Kunststoffverbindung (11, 12) zwischen Rückflusssohle (2) und der Rotorwelle (1) und die Kunststoffverbindung zwischen Rückflusssohle (2) und Magnetpolen (3) gesondert hergestellt sind.

8. Rotor nach einem der vorgenannten Ansprüche **dadurch gekennzeichnet, dass** zwei in einem zweistufigen Verfahren miteinander verschmolzene Kunststoffelemente vorgesehen sind.

9. Rotor nach einem der vorgenannten Ansprüche **dadurch gekennzeichnet, dass** die Rückflusssohle (2) Positionierungselemente (7) zur Zentrierung bezüglich der Rotorwelle (1) vor der Herstellung der ersten Kunststoffverbindung (11, 12) aufweist.

10. Rotor nach einem der vorgenannten Ansprüche **dadurch gekennzeichnet, dass** die Rotorwelle (1) Fixierelemente (4, 5, 6) zur Fixierung der Rotorwelle (1) in der Kunststoffverbindung (11, 12) aufweist.

11. Elektromotor mit einem Stator und einem Rotor **dadurch gekennzeichnet, dass** ein Rotor (10) nach einem der vorgenannten Ansprüche vorgesehen ist.

12. Verfahren zur Herstellung eines Rotors für einen Elektromotor mit Magnetpolen, einer Rückflusssohle und einer Rotorwelle **dadurch gekennzeichnet, dass** eine Kunststoffverbindung (11, 12) zwischen der Rückflusssohle (2) und der Rotorwelle (1) gespritzt wird.

13. Verfahren nach Anspruch 12 **dadurch gekennzeichnet, dass** eine Kunststoffverbindung (18) für die Magnetpole an der Rückflusssohle (2) gespritzt wird.

14. Verfahren nach einem der vorgenannten Ansprüche 12 bis 13 **dadurch gekennzeichnet, dass** in einem ersten Verfahrensschritt die Kunststoffverbindung zwischen Rückflusssohle (2) und der Rotorwelle (1) und einem zweiten Verfahrensschritt die Kunststoffverbindung zwischen den Magnetpolen (3) und der Rückflusssohle (2) gespritzt wird.

15. Verfahren nach einem der Ansprüche 12 bis 14 **dadurch gekennzeichnet, dass** im ersten Verfahrensschritt bei der Herstellung der ersten Kunststoffverbindung ein Kunststoffrahmen (12) zum Einsetzen der Magnetpole (3) geformt wird.

16. Verfahren nach einem der Ansprüche 12 bis 15 **dadurch gekennzeichnet, dass** in einem zweiten Verfahrensschritt bei der Fertigung der Kunststoffverbindung zwischen der Rückflusssohle (2) und den Magnetpolen (3) ein Kunststoffmantel (18) gespritzt wird.

17. Verfahren nach einem der Ansprüche 11 bis 16 **dadurch gekennzeichnet, dass** die Rückflusssohle (2) vor dem ersten Verfahrensschritt mittels Positionierungselementen (7) gegenüber der Rotorwelle (1) zentriert wird.

18. Verfahren nach einem der Ansprüche 11 bis 16 **dadurch gekennzeichnet, dass** die Magnetpole 3 in einem gesonderten Montageschritt außerhalb des Spritzwerkzeugs in den Kunststoffrahmen (12) eingesetzt werden.

19. Verfahren nach einem der Ansprüche 11 bis 17 **dadurch gekennzeichnet, dass** der Kunststoffrahmen (12) mit Rastelementen (17) zur Fixierung der Magnetpole (3) versehen wird.

20. Verfahren nach einem der Ansprüche 11 bis 17 **dadurch gekennzeichnet, dass** Anspritzpunkte (21) mittig zu den Magnetpolen (3) angeordnet werden.

21. Verfahren nach einem der Ansprüche 11 bis 17 **dadurch gekennzeichnet, dass** das Spritzen im Bereich der Magnetpole mit einer radial nach innen gerichteten Flussrichtung der Kunststoffschmelze vorgenommen wird.
